Europäisches Patentamt

European Patent Office

Office européen des brevets

(11) Veröffentlichungsnummer: **0 122 592**
**A2**

# (12) EUROPÄISCHE PATENTANMELDUNG

(21) Anmeldenummer: **84104036.3**

(22) Anmeldetag: **11.04.84**

(51) Int. Cl.³: **A 23 C 11/06**
**A 23 J 3/00**

(30) Priorität: **15.04.83 DE 3313644**

(43) Veröffentlichungstag der Anmeldung:
**24.10.84 Patentblatt 84/43**

(84) Benannte Vertragsstaaten:
**AT BE CH DE FR GB IT LI NL SE**

(71) Anmelder: **HOECHST AKTIENGESELLSCHAFT**
**Postfach 80 03 20**
**D-6230 Frankfurt am Main 80(DE)**

(72) Erfinder: **Scharf, Udo, Dr.**
**Altenhainer Strasse 20**
**D-6233 Kelkheim (Taunus)(DE)**

(72) Erfinder: **Schlingmann, Merten, Dr.**
**Schneidhainer Strasse 32a**
**D-6240 Königstein/Taunus(DE)**

(72) Erfinder: **Oezkan, Erol**
**Von-der-Tann-Strasse 34**
**D-4600 Dortmund 1(DE)**

(54) Kaffeeaufheller.

(57) Wird ein mikrobieller Eiweißstoff einer Extraktionsbehandlung zur Verminderung seines Nukleinsäure- und Lipidgehaltes unterworfen und dann mit Endoproteasen anzymatisch hydrolysiert, so erhält man ein funktionelles Hydrolysat, das sich für proteinreiche, ein Milcharoma enthaltende Kaffeeaufheller eignet. Die Kaffeeaufheller sind einwandfrei löslich, zeigen eine gute Aufhellungswirkung und einen angenehmen Geschmack. Sie eignen sich insbesondere zur Verbesserung der ernährungsphysiologischen Ausgewogenheit und des Geschmacks handelsüblicher Kaffeeaufheller.

EP 0 122 592 A2

Kaffeeaufheller

Die Erfindung betrifft einen Kaffeeaufheller, der sich durch besondere lebensmitteltechnologische und geschmackliche Eigenschaften auszeichnet.

Handelsübliche Kaffeeaufheller enthalten etwa 50 % pflanzliche Kohlenhydrate, etwa 40 % pflanzliche Fette und etwa 10 % Emulgator, Milcheiweiß und Mineralstoffe, wobei sich hier und im folgenden Prozentangaben auf das Gewicht beziehen. Demgegenüber enthalten die erfindungsgemäßen Kafeeaufheller zusätzlich ein funktionelles Hydrolysat, das aus einem mikrobiellen Eiweißstoff durch enzymatische Hydrolyse mit Endoproteasen erhalten wurde, sowie ein Milch-Aroma. Diese Zusätze verbessern nicht nur die ernährungsphysiologische Ausgewogenheit des Kaffeeaufhellers, sondern führen auch zu einer angenehmen Geschmacksabrundung. Löslichkeit und Aufhellwirkung sind einwandfrei.

Geeignete funktionelle Eiweißhydrolysate und ihre Herstellung sind in der (nicht vorveröffentlichten) deutschen Offenlegungsschrift 31 43 947 vorgeschlagen.

Es wurde weiterhin bereits vorgeschlagen (deutsche Patentanmeldung P 32 48 568.9), durch Hydrolyse mit physiologischen Proteasen unter milden Bedingungen abgebaute mikrobielle Eiweißstoffe in Kaffeeaufhellern einzusetzen.

Aus der deutschen Offenlegungsschrift 26 51 464 sind Kaffeeaufheller bekannt, die mikrobielle Proteine enthalten. Für diesen Einsatzzweck werden Protein-Phosphatkomplexe und acetylierte Proteine bevorzugt. Gegenüber Kaffeeaufhellern auf Caseinat-Basis werden Verbesserungen in der Verteilung im Kaffee, in der Aufhellung und im Geschmack beschrieben.

Aus der deutschen Patentschrift 27 45 954 ist es bekannt, ein ungereinigtes natürliches Protein aus der Gruppe Molkeprotein, mikrobielles Protein und pflanzliches Protein in wäßrigem Medium bis zu erheblicher Proteinfällung zu erhitzen und das ausgefällte und abgetrennte Protein enzymatisch abzubauen. Ein entsprechender Kaffeeaufheller auf Basis eines funktionellen Molkeproteins verhielt sich hierbei hinsichtlich der technologischen Eigenschaften genauso gut wie eine Aufheller-Rezeptur auf Natriumcaseinat-Basis. Mit einem funktionellen Bakterienprotein wurden vergleichbare Ergebnisse gefunden.

Sofern in den beschriebenen Kaffeeaufheller-Rezepturen ein mikrobielles Protein eingesetzt wurde, war dessen Einsatzmenge relativ gering. Demgegenüber wurde nun gefunden, daß mit dem erfindungsgemäß eingesetzten Proteinhydrolysat ein Kaffeeaufheller mit einem deutlich höheren Gehalt an mikrobiellem Protein hergestellt werden kann, der in seinen lebensmitteltechnologischen Eigenschaften einwandfrei ist, auf Grund des biologisch hochwertigen Proteins ernährungsphysiologisch vorteilhaft ist und vor allem eine angenehme Geschmacksnote aufweist.

Nach dem Verfahren der deutschen Offenlegungsschrift 31 43 947 wird das funktionelle Hydrolysat dadurch hergestellt, daß ein mikrobieller Eiweißstoff einer Extraktionsbehandlung zur Verminderung seines Nukleinsäure- und seines Lipidgehaltes unterworfen und dann einer enzymatischen Hydrolyse durch eine oder mehrere Endoproteasen unterworfen wird. Als Endoproteasen kommen Alkalase, Corolase, Trypsin und α-Chymotrypsin sowie Mischungen dieser Enzyme in Betracht. Besonders bevorzugt ist Trypsin. Temperatur und pH-Wert sowie das Enzym-Substrat-Verhältnis richten sich nach dem jeweils eingesetzen Enzym; diese Bedingungen sind an sich bekannt. Im allgemeinen wird die Temperatur bei der Proteolyse konstant gehalten und der sich in den sauren Bereich verschiebende pH-Wert durch Zugabe einer geeigneten Base, im allgemeinen verdünnter Natronlauge, konstant gehalten. Wenn der erwünschte Abbau erfolgt ist, wird das Enzym inaktiviert, im allgemeinen durch Erhitzen auf Temperaturen um oder über 80°C.

Das so erhaltene Hydrolysat kann direkt eingesetzt, einer Trocknung, beispielsweise Sprühtrocknung, unterworfen oder durch Fraktionierung beispielsweise durch Ultrafiltration, weiterzerlegt werden.

Als Ausgangsmaterial kommen alle üblichen mikrobiellen Eiweißstoffe in Betracht. Bevorzugt sind Eiweißstoffe aus methylotrophen, insbesondere aus Methanol verwertenden Mikroorganismen, da Methanol eine billige, Erdöl-unabhängige Kohlenstoffquelle darstellt. Auf Grund der biologischen Sicherheit sind obligat methylotrophe Organismen besonders bevorzugt. Methanol verwertende Mikroorganismen sind in großer Zahl bekannt und beispielsweise in den europäischen Patentanmeldungen 35 831 und 37 273, in der deutschen Auslegeschrift 21 61 164 und insbesondere in der deutschen Patentschrift 26 33 451 beschrieben.

Extraktionsbehandlungen zur Verminderung des Nukleinsäure- und Lipidgehalts der mikrobiellen Zellmassen sind beispielsweise in der deutschen Patentschrift 26 33 666 beschrieben. Besonders bevorzugt ist das in dieser Patentschrift beanspruchte Verfahren, bei dem in einer ersten Stufe die Lipide mit einer Extraktionsmischung aus Ammoniak und einem niederen Alkanol, einem niederen Glykol oder aus einem Methyl- oder Ethylether eines niederen Glykols extrahiert werden, wobei diese Extraktionsmischung höchstens 30 % Wasser, bezogen auf die eingesetzte Lösemittelmenge, enthält. Das bevorzugte Lösemittel ist Methanol. Der Ammoniakgehalt liegt vorzugsweise bei 1 bis 10 %, ebenfalls bezogen auf die eingesetzte Lösemittelmenge. Hierauf erfolgt eine ein- oder mehrstufige Extraktion der Nukleinsäuren mit Wasser.

Es ist vorteilhaft, wenn die mikrobiellen Zellmassen vor diesen Extraktionsbehandlungen durch eine Hitzebehandlung bei Temperaturen von 105 bis 160°C konditioniert werden. Diese Hitzebehandlung dauert vorteilhaft 3 bis 40, insbesondere 5 bis 20, Minuten bei einer Produkt-Temperatur von 105 bis 140°C. Dieses Konditionierungsverfahren verbessert nicht nur die mechanischen Eigenschaften der mikrobiellen Rohbiomasse, was einen geringeren Proteinverlust in der folgenden Extraktion ergibt, sondern hat auch einen vorteilhaften Einfluß auf die physiologischen Eigenschaften der erhaltenen Proteine.

Die erfindungsgemäßen Kaffeeaufheller enthalten zweckmäßig 5 bis 30 %, vorzugsweise 15 bis 25 %, insbesondere etwa 20 % Proteinhydrolysat.

Die Menge des Aromas kann in gewissen Grenzen schwanken und beträgt im allgemeinen 0,2 bis 0,8, vorzugsweise 0,3 bis 0,5, insbesondere etwa 0,4 %.

Zur Verbesserung eines handelsüblichen Kaffeeaufhellers, bestehend aus etwa 50 % pflanzlichen Kohlenhydraten und etwa 40 % Pflanzenfett sowie Emulgator, Milcheiweiß und Mineralstoffen, werden 4 Gewichtsteile dieses Kaffeeaufhellers mit einem Gewichtsteil Proteinhydrolysat intensiv gemischt und mit 0,4 %, bezogen auf die fertige Mischung, an einem handelsüblichen Milch-Aroma versetzt.

In den folgenden Beispielen beziehen sich Prozentangaben ebenfalls auf das Gewicht.

Beispiel 1:

Herstellung des Protein-Hydrolysats Eine Bakterienmasse aus Methylomonas clara ATCC 31 226 gemäß deutscher Patentschrift 26 33 451, Beispiel 2, wurde 30 Minuten in einem Wirbelbett bei 160°C Lufttemperatur behandelt, wobei 10 Minuten eine Produkttemperatur von 120°C eingehalten wurde. Diese thermisch nachbehandelte Zellmasse

wurde dann gemäß Beispiel 1 der deutschen Patentschrift 26 33 666 mit methanolischem Ammoniak und anschließend mit Wasser extrahiert.

100 g dieses Proteinisolats wurden in 900 ml Wasser suspendiert und der pH-Wert durch Zugabe von 4 N Natronlauge auf 8,0 eingestellt. Die Suspension wird auf 45°C vorinkubiert, mit 100 mg Trypsin PTN 3.0 S (Fa. Novo) versetzt und unter Aufrechterhaltung der Temperatur und des pH-Werts 1 Stunde inkubiert. Zur Inaktivierung des Enzyms wird der Ansatz 5 Minuten auf 80°C erhitzt, die Mischung neutralisiert und die Suspension sprühgetrocknet.

Beispiel 2:

Herstellung des Kaffeeaufhellers

0,8 kg handelsüblicher Kaffeaufheller (bestehend aus etwa 50 % pflanzlichen Kohlenhydraten, etwa 40 % Pflanzenfett sowie einem Emulgator, Milcheiweiß und Mineralstoffen), wurden mit 0,2 kg Proteinhydrolysat gemäß Beispiel 1 intensiv vermischt und 4 g handelsübliches Milch-Aroma (Fa. Riedel-arom, Dortmund) zugesetzt.

Der Kaffeeaufheller war einwandfrei löslich, zeigte eine gute Aufhellwirkung und einen angenehmen Geschmack.

Eine Gruppe sachkundiger Prüfer beurteilte einen mit dem erfindungsgemäßen Kaffeeaufheller versetzten Kaffee oder Tee (jeweils 1 Teelöffel= 3 g pro Tasse) als angenehm, wobei der Geschmack dem mit dem eingesetzten Kaffeeaufheller versetzten Kaffee und Tee vorgezogen wurde.

Patentansprüche:

1. Kaffeeaufheller mit einem Gehalt an Kohlenhydraten, pflanzlichen Fetten und Hilfsstoffen, gekennzeichnet durch einen Gehalt an Milcharoma und einem mikrobiellen Eiweißstoff, der einer Extraktionsbehandlung zur Verminderung seines Nukleinsäure- und seines Lipidgehaltes unterworfen und dann einer enzymatischen Hydrolyse durch eine oder mehrere Endoproteasen unterworfen wurde.

2. Kaffeeaufheller nach Anspruch 1, dadurch gekennzeichnet, daß der Gehalt an dem Proteinhydrolysat 5 bis 30 Gew.-% beträgt.

3. Kaffeeaufheller nach Anspruch 1 oder 2, dadurch gekennzeichnet, daß der Gehalt an Proteinhydrolysat 15 bis 25 Gew.-% beträgt.

4. Kaffeeaufheller nach einem oder mehreren der vorhergehenden Ansprüche, dadurch gekennzeichnet, daß der Gehalt an Milcharoma 0,2 bis 0,8 Gew.-% beträgt.

5. Kaffeeaufheller nach einem oder mehreren der vorhergehenden Ansprüche, dadurch gekennzeichnet, daß der Gehalt an Milcharoma 0,3 bis 0,5 Gew.-% beträgt.

<u>Patentansprüche für Österreich:</u>

1. Verfahren zur Herstellung eines Kaffeeaufhellers mit einem Gehalt an Kohlenhydraten, pflanzlichen Fetten und Hilfsstoffen, dadurch gekennzeichnet, daß den übrigen Bestandteilen Milcharoma und ein mikrobielles Proteinhydrolysat zugesetzt werden, das aus einem mikrobiellen Proteinisolat erhalten wurde, welches einer Extraktionsbehandlung zur Verminderung seines Nukleinsäure- und Lipidgehaltes unterworfen und dann einer enzymatischen Hydrolyse durch eine oder mehrere Endoproteasen unterworfen wurde.

2. Verfahren nach Anspruch 1, dadurch gekennzeichnet, daß 5 bis 30 Gew.-% Proteinhydrolysat zugesetzt werden.

3. Verfahren nach Anspruch 1 oder 2, dadurch gekennzeichnet, daß 20 bis 25 Gew.-% Proteinhydrolysat zugesetzt werden.

4. Verfahren nach einem oder mehreren der vorhergehenden Ansprüche, dadurch gekennzeichnet, daß 0,2 bis 0,8 Gew.-% Milcharoma zugesetzt werden.

5. Verfahren nach einem oder mehreren der vorhergehenden Ansprüche, dadurch gekennzeichnet, daß 0,3 bis 0,5 Gew.-% Milcharoma zugesetzt werden.